(19) Europäisches Patentamt

European Patent Office

Office européen des brevets

(11) **EP 1 365 519 B1**

(12) **EUROPEAN PATENT SPECIFICATION**

(45) Date of publication and mention
of the grant of the patent:
**28.12.2005 Bulletin 2005/52**

(51) Int Cl.⁷: **H04B 7/00**

(21) Application number: **02425315.5**

(22) Date of filing: **20.05.2002**

(54) **Interference erasing system with independent receivers**

System zur Interferenzauslöschung mit unabhängigen Empfängern

Système pour l'effacement d'interférence avec recepteurs indépendants

(84) Designated Contracting States:
**AT BE CH CY DE DK ES FI FR GB GR IE IT LI LU
MC NL PT SE TR**

(43) Date of publication of application:
**26.11.2003 Bulletin 2003/48**

(73) Proprietor: **SIAE Microelettronica S.p.A.**
**20124 Milano (IT)**

(72) Inventors:
• **Rossi, Leonardo**
**29100 Piacenza (IT)**
• **Salvaneschi, Cesare**
**27043 Broni (PV) (IT)**
• **Nava, Marco**
**20099 Sesto San Giovanni (MI) (IT)**
• **Miletic, Alenka**
**20091 Bresso (MI) (IT)**

(74) Representative: **Gatti, Enrico**
**Gianbrocono & C. s.p.a.**
**Via E. Zambianchi, 3**
**24121 Bergamo (IT)**

(56) References cited:
**EP-A- 0 552 692        EP-A- 0 902 556
DE-A- 19 926 658**

**Description**

The present invention relates to an interference erasing system with independent receivers. More particularly it refers to a demodulation system of a first signal interfered by a second signal, and to a telecommunication system comprising transmission means able to transmit two radio signals and receiving means able to receive said two radio signals, said receiving means comprise a demodulation system of a first signal interfered by a second signal and the method for reducing this interference.

In the telecommunication systems it often occurs that the user realizes his own connection network initially, with all the necessary infrastructures, to transport an only data bundle, and only afterwards the need to strengthen the realized network is revealed, but using always the same radio-frequency channel for reasons of simplicity and of cost. The known techniques until today allow the frequency reuse for example by means of the transmission of two separate signals on the two vertical (V) and horizontal (H) polarizations of the antenna. Because of the not ideality of the equipments and of the transmission means the H and V signals tend to interfere between them. In order to be able to recover the signals correctly in condition of strong degrade of the transmission channel it is inevitable the use of cross polarization interference canceller (XPIC). This however involves system constraints, like for example the use of only one local oscillator for the signal conversion, from radio frequency to intermediate frequency, for the two receivers. It occurs therefore that the addition of the second receiver for the increasing requires to modify the existing equipment initially installed. These constraint results of not easy realization or even not practicable when the radio block is situated in a container set outside immediately near to the antenna. In fact, in these cases it is preferable to replace the existing radio block with a new one containing the two receivers.

Document EP-A-0902556 discloses a cross polarization interference canceller.

In view of the state of the art described, it is an object of the present invention to provide a receiving system of two channels mutually interfering with circuits that do not require constraints between the two receivers.

According to the present invention, such object is achieved by a demodulation system of a first signal and of a second signal, said first signal being interfered by said second signal, comprising: a first converter for converting said first signal from radio frequency to intermediate frequency controlled by a first oscillator; a first multiplier in cascade to said first converter; a first equalizer in cascade to said first multiplier; a second converter for converting said second signal from radio frequency to intermediate frequency controlled by a second oscillator; a second multiplier in cascade to said second converter; a second equalizer in cascade to said second multiplier; a first adder node in cascade to said first equalizer and to said second equalizer; a first decider circuit in cascade to said first adder node providing an esteemed signal of said first signal and a signal corresponding to the square error of said esteemed signal compared to the ideal value; a first carrier recovery circuit receiving a coming out signal from said first adder node and said signal corresponding to the square error and providing a signal to said first multiplier; a second carrier recovery circuit receiving said signal corresponding to the square error and a signal provided from said second multiplier and providing a signal to said second multiplier.

According to the present invention, such object is also achieved by means of a telecommunication system comprising transmitting means able to transmit two radio signals and receiving means able to receive said two radio signals, said receiving means comprise a demodulation system according to claim 1.

According to the present invention, such object is also achieved by means of an interference cancellation method of a first signal interfered by a second signal with independent receivers comprising the phases of: converting said first signal from radio frequency to intermediate frequency by means of a first oscillator; multiplying said first converted signal by a third signal; equalizing said first converted signal multiplied by said third signal; converting said second signal from radio frequency to intermediate frequency by means of a second oscillator; multiplying said second converted signal by a fourth signal; equalizing said second converted signal multiplied with said fourth signal; adding said first equalized signal and said second equalized signal; determining an esteemed signal of said first signal and a signal corresponding to the square error of said esteemed signal compared to the ideal value based on said added signal; generating said third signal based on said added signal and said signal corresponding to the square error; generating said fourth signal based on said signal corresponding to the square error and on a signal provided from the phase of multiplying said second signal at intermediate frequency with a fourth signal.

Thanks to the present invention it is possible to realize a system with independent receivers that allows facility of use and of installation, but above all it easily allows the doubling capacity of already existing and installed systems.

The features and the advantages of the present invention will be made evident by the following detailed description of an embodiment, thereof that is illustrated as not limiting example in the annexed drawings, wherein:

figure 1 represents a blocks scheme of a telecommunication system according to the known art;
figure 2 represents a blocks scheme of a telecommunication system according to a first embodiment of the present invention;
figure 3 represents a blocks scheme of a telecommunication system according to a second embodiment of the present invention.

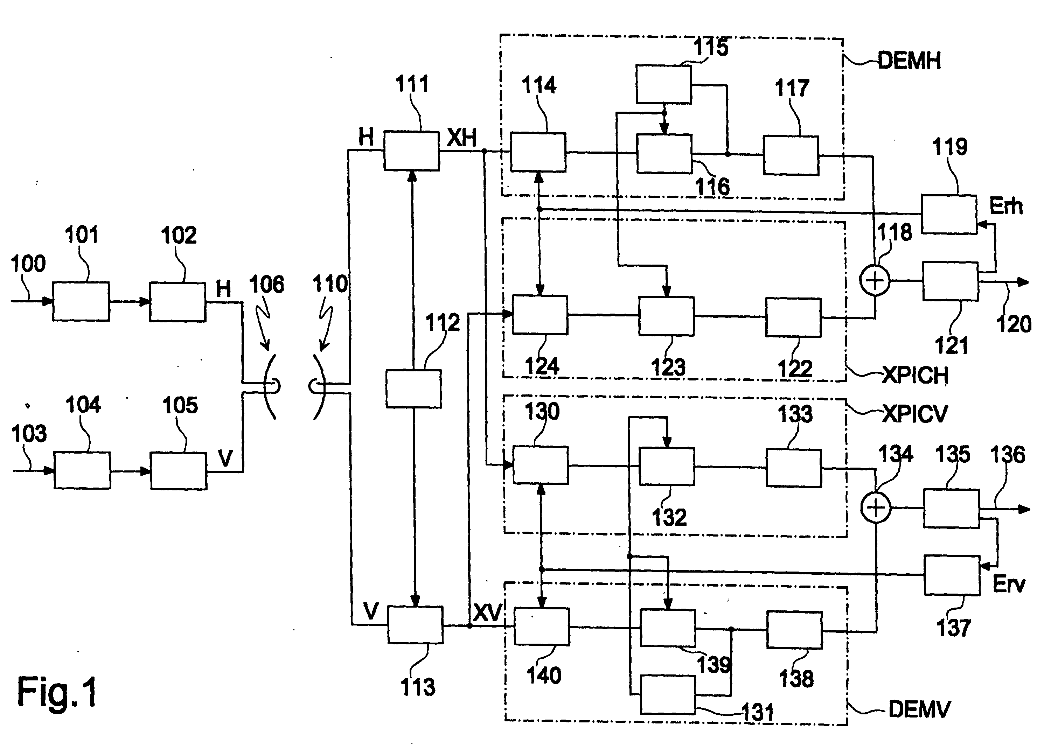

In figure 1, that represents a blocks scheme of a telecommunication system according to the known art, it is considered a frequency reuse system with a single antenna for site with double polarization that uses an interference canceller.

Two data flows 100 and 103 are sent respectively to the modulators 101 and 104 and therefore sent to the transmitters 102 and 105 and transmitted by the antenna 106 according to two different polarizations horizontal (H) and vertical (V).

The receiving antenna 110 receives the H and V signals and sends them respectively to the converters 111 and 113, contained in the RXH and RXV receivers, that convert the signals from radio frequency to intermediate frequency by means of an only oscillator 112. The receivers H and V also contain the remaining typical circuits of a receiver, from the amplification to the automatic gain control.

The signal at intermediate frequency XH, coming from the converter 111, is applied in succession to a multiplier 114, to a sampler 116, to an equalizer 117 and to an adder 118.

The signal at intermediate frequency XV, coming from the converter 113, is applied in succession to a multiplier 124, to a sampler 123, to an equalizer 122 and to the adder 118.

The output of the adder 118 is applied to a decider 121 which provides at its output the data 120. The decider 121 also provides at its output an estimation Erh of the error of the data 120 that it is applied to the input of a circuit 119 for the carrier recovery whose output drives the multipliers 114 and 124. A circuit 115 for the synchronisation recovery takes the signal at the output of the sampler 116 and drives the samplers 116 and 123.

The samplers 116 and 123 are used for the signal elaboration in a numerical way by the following blocks: this way is usual for modernity facility but is not constraining.

Analogously, the signal at intermediate frequency XV is applied also in succession to a multiplier 140, to a sampler 139, to an equalizer 138 and to an adder 134. The signal at intermediate frequency XH is applied also in succession to a multiplier 130, to a sampler 132, to an equalizer 133 and to the adder 134.

The output of the adder 134 is applied to a decider 135 that provides at its output the data 136. The decider 135 also provides at its output an estimation Erv of the error of the data 120 that is applied to the input of a circuit 137 for the carrier recovery whose output drives the multipliers 130 and 140. A circuit 131 for the synchronisation recovery takes the signal at the output of the sampler 139 and drives the samplers 132 and 139.

The blocks 114, 115, 116 and 117 constitute a demodulator DEMH. The blocks 124, 123 and 122 constitute a cross polarization interference canceller XPICH. The blocks 140, 139, 138 and 131 constitute a demodulator DEMV. The blocks 130, 132 and 133 constitute a cross polarization interference canceller XPICV.

What is pointed out in figure 1 shows the elements used for making the transmission from a site to an other site: the transmission in the opposite way is realized by elements of the same type not shown for simplicity, so that each site contains all the blocks.

Normally the transceiver station is equipped with a double polarization antenna, an external container containing the transmitter 102 or 105 of the transmission channel set on a first frequency f1, the receiver (RXH or RXV) of the receiving channel set on a second frequency f2, both working on a first polarization of the antenna. By means of a cable, that transports the transmitting and receiving signals sets on intermediate frequencies, the two external blocks are connected to the correspondents inside blocks, respectively the modulator (101 or 104), the demodulator (DEMH or DEMV) and the canceller (XPICH or XPICV), coupleed to the demodulator, that elaborates the signal received from the second polarization of the antenna.

In this case and in the following examples, the single antenna with double polarization could be replaced by two antenna with single polarization provided that they are placed at brief distance, so in order not to introduce between the signals a difference in the path along the propagation channel, as that they could be considered like not diversified in the space.

To notice the presence of an only oscillator 112 for the conversion of the signal from radio frequency (RF) to intermediate frequency (IF).

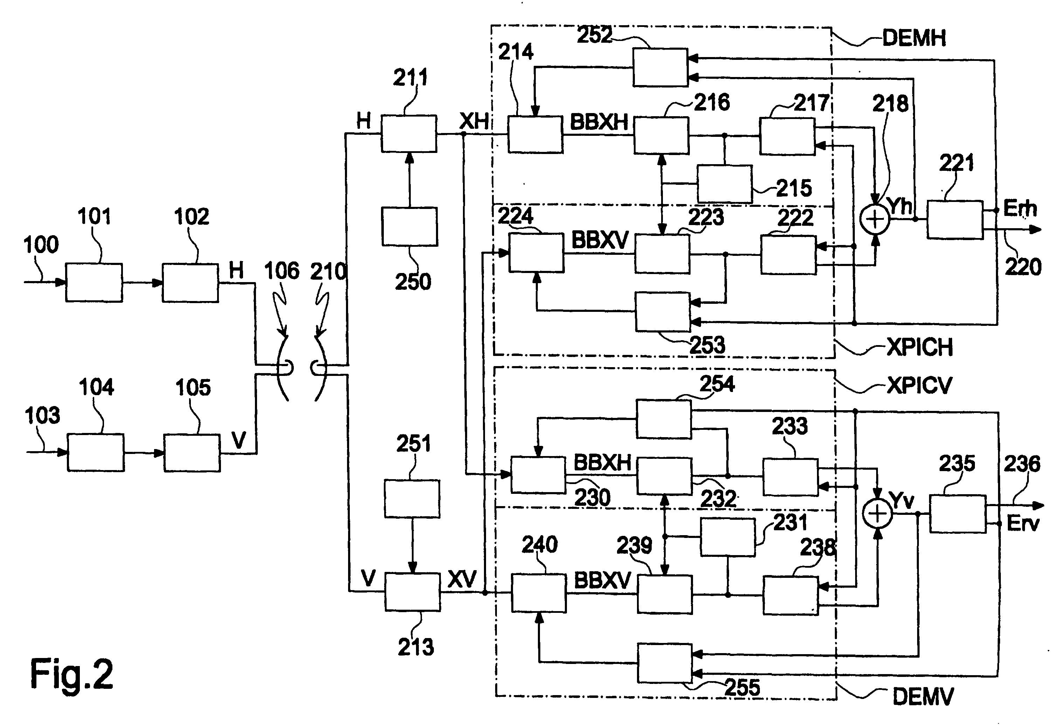

In figure 2, that represents a blocks scheme of a telecommunication system according to a first embodiment of the present invention, a frequency reuse system with single antenna for site with double polarization that uses an interference canceller is still considered.

Two flows of data 100 and 103 are sent respectively to the modulators 101 and 104 and therefore sent to the transmitters 102 and 105 and transmitted by the antenna 106 according to two different polarizations horizontal (H) and vertical (V).

The receiving antenna 210 receives the H and V signals and sends them respectively to the converters 211 and 213 contained in the receivers that convert the signals from radio frequency to intermediate frequency by means of two oscillators 250 and 251.

The signal at intermediate frequency XH, coming from the converter 211, is applied in succession to a multiplier 214, to a sampler 216, to an equalizer 217 and to an adder 218.

The signal at intermediate frequency XV, coming from the converter 213, is applied in succession to a multiplier 224, to a sampler 223, to an equalizer 222 and to the adder 218.

The output of the adder 218 is applied to a decider 221 that provides at its output the data 220. The decider 221 also provides at its output an estimation Erh of the error of the data 220 that is applied to the input of a circuit 252 for the carrier recovery whose output drives the multiplier 214. The circuit 252 receives in input also the signal Yh available at the output of the adder 218.

A circuit 215 for the synchronisation recovery takes the signal at the output of the sampler 216 and drives the samplers 216 and 223.

The estimation Erh of the error of the data 220 is also applied to a circuit 253 for the phase synchronisation recovery, to the equalizer 222 and to the equalizer 217. At the circuit 253 is also applied the output of the sampler 223. The output of the circuit 253 drives the multiplier 224.

The circuit 253 works, as said, on sampled signals, therefore the signals coming out from the sampler 223 and from the decider 221; the same elaboration could be effected on continuous signals in the time, for example on the signal now in entrance in the sampler 223 and on a version in temporal continuity of the Erh signal.

Analogously, the signal at intermediate frequency XV is applied in succession to a multiplier 240, to a sampler 239, to an equalizer 238 and to an adder 234.

The signal at intermediate frequency XH is applied in succession to a multiplier 230, to a sampler 232, to an equalizer 233 and to the adder 234.

The output of the adder 234 is applied to a decider 235 that provides at its output the data 236. The decider 235 also provides at its output an estimation Erv of the error of the data 236 that is applied to the input of a circuit 255 for the carrier recovery whose output drives the multiplier 240. The circuit 255 receives at its input also the signal Yv available at the output of the adder 234.

A circuit 231 for the synchronization recovery takes the signal at the output of the sampler 239 and drives the samplers 232 and 239.

The estimation Erv of the error of the data 236 is also applied to a circuit 254 for the phase synchronisation recovery, to the equalizer 233 and to the equalizer 238. At the circuit 254 is also applied the output of the sampler 232. The output of the circuit 254 drives the multiplier 230.

At the input of the circuit 254 is applied the signal in output from the sampler 232: it is valid for it the consideration on the signals calculation in analogical continuity as for the circuit 253.

The converters 211 and 213 with the related oscillators 250 and 251 are contained in the receivers RXH and RXV, not shown in their completeness for brevity. The blocks 214, 215, 216, 217 and 252 constitute the demodulator DEMH. The blocks 224, 223, 222 and 253 constitute the cross polarization interference canceller XPICH. The blocks 240, 239, 238, 255 and 231 constitute the demodulator DEMV. The blocks 230, 232, 254 and 233 constitute the cross interference cancellers XPICV.

In the case of doubling of the transmission capacity it is added to each site a second container containing the same type of equipments and connected to the second polarization of the antenna and working, as said, on the same frequencies f1 and f2. In the initial case of use of an only polarization, it is indifferent the existence or less of the XPIC block, essential instead in the expansion.

The principal advantage of the present invention it is the fact of not requiring any connection between the first and the second container of the site, that is between the two receivers.

The demodulator DEMH receives the signal XH in input received at intermediate frequency from the RXH receiver placed on the principal polarization, for instance H, that contains the interference generated along the propagation path by the signal transmitted on the V. polarization. It contains the circuits able to provide at the demodulation of XH by means of the sinusoid signal generated inside the circuit 252 for the carrier recovery, and it provides the base band complex signal BBXH at its output.

The demodulator DEMV receives the signal XV from the receiver placed on the cross polarization in input, for instance V. It develops the same function of demodulator DEMH and uses the sinusoid signal generated inside the circuit 255 for the carrier recovery to provide the base band complex signal BBXV.

The circuit 215 and the samplers 216 and 223, like also the circuit 231 and the samplers 232 and 239 constitute the system for the synchronization recovery (clock) that belongs to the family of the clock recoveries not helped by the data: that is it uses the samples of the received signal before being processed. The process therefore uses the clock already recovered and locked avoiding a first recovery condition joined to the condition of intelligibility or less of the information received. The method used for the clock recovery uses two samples for symbol time for each of the signals to be processed and it is of the type as described in the article of F. M. Gardner, "Demodulator Reference Recovery Techniques Suited For Digital Implementation," ESA Final Report Estec n. 6847/86/NL/D4 August 1988, and in the article of F. M. Gardner, "To BPSK/QPSK Timing-Error Detector For Sampled Receivers," IEEE Transaction Comm [on]. Vol. COM-34 pagg. 423-429 May 1986.

The equalizer 217 contains the normal used circuits for the adaptive equalizzation of the signal at its input, so to reduce to the minimum the content of intersimbolic distorsion. It is normally realized by means of a structure of type filters FIR (Finite Impulse Response) numerical complex with adaptive coefficients (called of the type 4D) that uses the signal Erh for their updating.

The generic coefficient in position j is so described in its real and imaginary parts:

$$coef_j = C11 + C22 + i^* (C12 + C21)$$

It is broadly documented in literature as for instance in the books of D. G. Messerschmitt, E. A.Lee, "Digital Communication"; of S. Haykin "Adaptive Filter Theory"; of J.G. Proakis "Digital Communications."

The equalizer 222 has identical structure to the equalizer 217, of which however are constrained to the zero value the imaginary parts of the central coefficient, that is it is set C12= C21= 0.

The decider 221 performs the estimation of the transmitted symbol. It provides in output the data 220 that is the symbols Ash that result to be the most probable corresponding symbols to those transmitted and that they continue in output for the following elaborations of which a demodulator could be provided, as the error correction and others (here not shown).

Besides it calculates the signal Erh = Yh - Ash that corresponds to the error that it is used in the feedback for the control of the adaptive coefficients. Normally the whole blocks tends to minimize a functional of Erh.

Here below there is a summary explanation of the MQAM modulation and of the carrier recovery. The transmission carrier is modulated so that the result is that of making it to assume a given amplitude and phase representable by means of a vector. This vector, that could assume a number normally defined of values, constitutes the informative content or symbol transported by the carrier. In order to be able to provide the estimation of symbols As in the receiver it is necessary to reconstruct them in reception with the same amplitude and phase as transmitted, with an error precision lesser than a ½ of the vectorial difference existing between them. The estimation As could be so realized and calculated the error Er as the difference compared to the ideal value.

Inside the circuit 252 there is a correlator that receives the signals Yh and Erh in input, and performs the calculation of the complex product Erh* Yh, finalized to the coherent carrier synchronism recovery. Such a product is filtrated by the loop filter (an integrator) placed in cascade to the correlator and contained in the circuit 252, that must be designed, by the designer, based on the symbol frequency of the signal.

The circuit 252 also contains an voltage controlled oscillator VCO by the signal at the output of the loop filter. The whole of the contained circuits in the circuit 252, and their design, are included in the general method of carrier recovery, and they are known technique of the transmission system with coherent carrier (a classical example is the Costas loop).

The circuit 253 has the assignment, in its more general meaning, of phase synchronism recover, that is it must work so that the signal XV is coherent in phase with the interference contained in XH. This premise allows to the downstream system of carry out the function of canceller.

The circuit 253 comprises circuits as those described for the circuit 252, where however instead of having the signals Erh and Yh as inputs, it receives the signals Erh and BBXV in input (after being sampled by the circuit 223). Particularly the loop filter band included in the integrator can have a cutoff frequency greater or equal of the integrator contained in 252, as it is not critic for the good operation of the whole.

Here below there is a very short explanation of the adaptive equalizer and cancellation functions.

The canceller XPICH (or XPICV) must be able to reduce to the minimum in XH (or XV) the interference in itself contained and originated from the same signal that is received as the main one in XV (or XH). If XH and XV had been treated by receivers with a common oscillator, a phase coherence between the interference contained in the signals XH and the XV used to cancel it would be obtained automatically. The conceptual assignment of the canceller would so result of normal execution: it must modify amplitude and phase of XV in such a way that, added to XH in the adder 218, the interference in itself contained will be cancelled. The described concept often realized according to what previously indicated in which the adding operation occurs in base band. The fact of using the base band signal BBXH in output of the adaptive equalizer do not change the function as the latter results transparent to the interference content. In fact it uses the correlation between the signals BBXH and Erh whose temporal mean for updating the coefficients do not change in presence of the interference. An analogous correlation instead produces a sensitive variation of the temporal mean of the product between BBXV and Erh. It is this correlation, calculated for each position j of BBXV inside the delays of the FIR structure of the canceller, that is able to produce that value of the coefficient j that contributes to the cancellation.

The updating for the instant k+1 of the coefficient in position n, whose components contain at least the terms:

$$C^{k+1}{}_{11_n} = C^k{}_{11_n} - stsz \cdot \left(real\left(er^k\right) \cdot real\left(BBXV^{k-n}\right)\right)$$

$$C^{k+1}{}_{12_n} = C^k{}_{12_n} - stsz \cdot \left(imag\left(er^k\right) \cdot real\left(BBXV^{k-n}\right)\right)$$

$$C^{k+1}{}_{21_n} = C^k{}_{21_n} - stsz \cdot \left(real\left(er^k\right) \cdot imag\left(BBXV^{k-n}\right)\right)$$

$$C^{k+1}{}_{22_n} = C^k{}_{22_n} - stsz \cdot \left(imag\left(er^k\right) \cdot imag\left(BBXV^{k-n}\right)\right)$$

in which:

1) stsz is a compression constant factor of the coefficient updating: in this way the coefficient is updated with a own time constant determined by stsz, from which it is said that it follows the gradient method.
2) an other term that will appear, with discretion of the designer, will be the one constrained to the stabilization of the coefficients in the case of configuration with fractionated spacing, in which the equalizer uses more than a sample for symbol period;
3) or also, if the designer chooses of configuring the equalizer with $C_{11}=C_{22}= 1$ for the central position and therefore downstream followed by an automatic control level with coefficient $M = M_{11}+M_{22}$, a compression factor constrained to this coefficient should appear.

Also the coefficient number is a choice of the designer. If the points 2) and 3) are at the discretion of the designer, the point 1) is normally typically recurrent: the greater or the lesser value of stsz determines the updating speed of the coefficient causing a greater or lesser standard deviation of the value of the coefficient itself, with a different noise value on the final result of the process, normally definited, in slang, tap wandering noise, and it must be suitably designed in the limits of the system tolerance.

Normally the designer design the integration of the correlation, that is stsz, in such a way that the process of the signal numerical elaboration produces its own noise that is quite below and not to alter the situations of noise to which the system is subject for the plant demands.

It results in each case that stsz determines the intrinsic capacity of the canceller in the adaptive tracking of the phase rotations to give to XV. It results in each case insignificant if the receivers have the common oscillator. In that case, the rotations would be due to the time-varying variations of the transmission channel, that are broadly supported by any numerical process. Different it is the case of the present invention, in which the receivers are independent, each therefore subject to its own dispersions both constructive and due to thermal variations.

Setting to zero the imaginary parts of the central coefficient of the equalizer 222 is used for limiting to the maximum the rotation capacity of the canceller and for leaving at the only circuit 253, the assignment of tracking it for the phase synchronism recovery.

The phase recovery on behalf of the circuit 253 occurs thanks to the fact that the correlation maintains a control on the sinusoid generated by the VCO: this is so locked to a frequency and a phase such to produce in output a signal BBXV in phase with the interference. Therefore the XPIC has to limit its action to the adattative control of the amplitude and if necessary of the impulsive response in the case of contemporary presence of intersimbolic distorsion. The conclusion of the cancellation operation ends at the adder node 218. Differently would be if it was the FIR block 222 to have to rotate the phase moving all the coefficients: it would be a too much serious assignment for the gradient algorithm that controls them. For example, it would be able to follow a rotation request produced by a frequency difference between the local oscillators of the receivers contained in some tens of Hertz: this assignment is instead easily absolved setting an opportune carrier with the block 253, also when that difference reaches normally the real cases of some hundreds of kiloHertz.

The obtainable performances by the system according to the present invention do not result significantly different respect to the systems with interconnected receivers however the ability of interference cancellation.

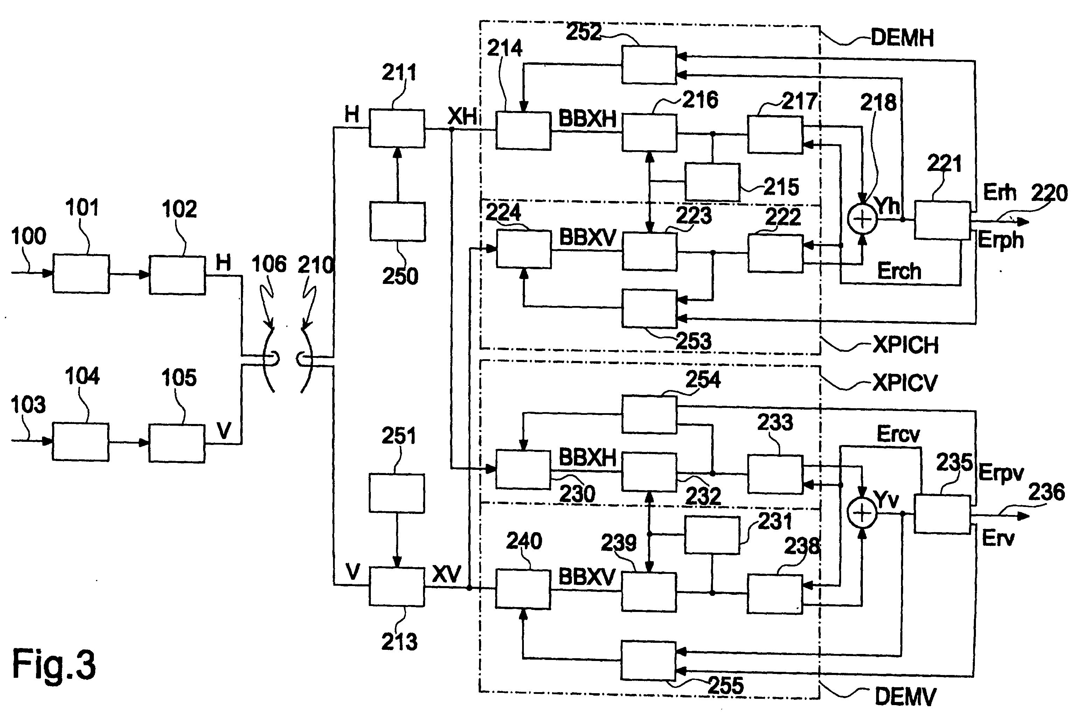

In figure 3, that represents a blocks scheme of a telecommunication system according to a second embodiment of the present invention, a system of frequency reuse with a single antenna for site with double polarization that uses a interference canceller is still considered.

Compared to figure 2, in the figure 3, the deciders 221 and 235 produce three different estimations of the error of the data 220 and 236. Particularly, the error Erh, produced by the decider 221, is applied to the circuit 252 for the carrier recovery. The error Erph, produced by the decider 221, is applied to the circuit 253 for the phase synchronism recovery. The error Erch, produced by the decider 221, is applied to the equalizer 222 and to the equalizer 217.

Analogously, the error Erv, produced by the decider 235, is applied to the circuit 255 for the carrier recovery. The error Erpv, produced by the decider 235, is applied to the circuit 254 for the phase synchronism recovery. The error Ercv, produced by the decider 235, is applied to the equalizer 233 and to the equalizer 238.

We now consider the dynamic behavior that characterizes the system in the case of exit from a situation of loss of synchronism. The loss of synchronism occurs when the propagation conditions degrade the channel to the point that the demodulator is not able to give a sequence of symbols As in a correct way in a percentage greater than the 50% of the decisions. When then the channel returns to corresponding conditions of corrected decisions possible for more than the 50%, that is only sufficient but not excellent, the system is not however able to reconstruct jointly both the carriers staying therefore in a situation of loss of synchronism not justified by the limited degrade of the channel. This is what is revealed in the first embodiment of the present invention. It requires that the channel improves further the global conditions in terms of noise and of cross interference, to the point of allowing to the demodulator of reconstruct its own carrier also in presence of a level of interference that the canceller is not able to eliminate.

For example, the case of modulation 32QAM has a behavior so describable: normal performances there are at the rising of the interference that is progressively cancelled up to very strong values, that is to a (wanted signal)/(interfering signal) W/I ratio lower than 3 dB. If then the degrade further worsen the conditions up to the loss of synchronism, it is necessary that the W/I ratio returns to values around 16 dB to recover the restoration of the whole system.

Such degrade is to be attributed to the phenomenons of slow type, otherwise from those of fast type due to multipaths that characterize, in dependence also by the frequencies in use, the connections typically with length higher than 25 km.

The attenuation and the depolarization due to rain could make reach the conditions of loss of connection in a short time, stay normally for a time of some tens of seconds giving an inevitable out of order, therefore return with a fast transitory to acceptable conditions in which all the system restart to take corrected decisions: the transitory of the natural phenomenon is so fast not to make appreciable the appearance constraint to the restoration hysteresis.

Different is the case of the connections of such length to be subject to multipaths phenomenons. In them a period of a deep degrade of channel could occurs, of duration of some tens of seconds typically, characterized by fast passages from conditions of tolerable degrade to deep degrade: also if not demonstrated, it is possible that the restoration hysteresis could not allow the re-locking in the brief periods of tolerable degrade, so that all the period affected with the phenomenon results out of order, for this reason the user hardly would agree to use the system of the first embodiment also in these cases.

Despite this introduction, the Applicant has found a reconstruction method of the carrier submittedto the canceller able to reduce the restoration hysteresis notably, also allowing to the system with independent receivers such a recovery ability to make it usable also on connections affected by multipaths. The system as described in figure 3 resolves the problem and it deal with the error calculation method.

Precisely beyond to the error Er, traditionally definited of square type the circular error Erc is used and the circular error continuous Erp, that is obtained from Erc without the interruptions that characterize it described in the following.

The first step consists in making the equalizers independent from the carrier phase for which it has been realized a circular decider of the family of those proposed in the followings articles di D. N. Godard, "Self Recovering Equalization and Carrier Tracking in Two Dimensional Data Communication System," IEEE Transaction on Communication, vol COMM-33 Aug.1985, p.753; A. Benveniste, M. Goursat, "Blind Equalizers," IEEE Transaction on Communication, vol COMM-32, Aug. 1984, p.871; A. Benveniste, M. Goursat, G. Ruget, "Robust Identification of a Nonminimum Phase System: Blind Adjustment of a Linear Equalizer in Communications Date," IEEE Transaction on Automatic Control VolAC-25, June 1980, p.385.

For the calculation of the circular error Erc a family of circumferences is considered, passing for the exact theoretical points of the constellation, that form the grid used by the circular decider placed inside the decider circuit 221.

The decision method is one among those before quoted and it is opportunely modified so as of have only one decision method relatively both in acquisition moments after synchronism loss, produced by situations of fading particularly deep and blind acquisitions definited not being in this phase the information intelligible, and in situation of normal regime, that is without commutation of parts of method between a case and the other. Precisely, said u the vector of components real and imaginary part of which at the output of the adder 218, and d the radius of the circumference of the family of the nearest value to u, the circular error is given by:

$$real\ (erc) = \frac{u - d}{u} \cdot real\ (u)$$

$$imag\ (erc) = \frac{u - d}{u} \cdot imag\ (u)$$

and it tends towards zero at reached acquisition and in absence of noise and/or distorsion, at the coinciding of u with d. Instead, the references above quoted use a circumference of fixed value df around correspondent to the centre of gravity of the constellation in acquisition, for the calculation of the circular error to be used in the updating of the coefficients: at occurred acquisition, the distance u-df stays statistically high, requiring of commuting to other type of calculation. In the system in object, the use of the error calculated referring to this fixed circumference is used only as comparison in sign with the circular one: if for the instant k the signs are not concordant, the updating of the coefficients is suspended.

Erc (h or v) is therefore the error with the real and imaginary parts described, jointly to the zero setting in the cases of suspension. Erp is given by Erc without the suspensions (of updating of the coefficients, they are continually updated).

The obtained system, therefore, adopts in the processes of base band of equalizer and XPIC the FIR structure controlled by the described circular error. Its use allows that both result independent from the carrier phase of the demodulator: they can in each way shape their own coefficients in the correct way, also in absence of a correct phase of the demodulation carrier.

For its definition, Erc results, as said, independent from the demodulator carrier phase (going out from 252), while it suffers from the presence of the interference and from the quantity cancelled: the degree of cancellation also depends on the carrier phase (in exit from the block 253), establishing so a correlation with it. Or again, the unlock of the carrier of the DEM provokes the not correctness of the estimation of the data and the rotation of the equalized constellation, whose points describe circumferences without increasing Erc. The unlock of the carrier XPIC provokes instead a widening of the circumferences with increasing Erc.

If in the first embodiment there was the reciprocal dependence of the recoveries of the two carriers, being both dependent on the same Er, dependent on the correctness of the decisions, in this second embodiment Er serves for only to stop the demodulator carrier phase to the value that allows the correctness of the decisions with a minimising of Er itself or of one of its opportune functional, but it is no more implicated in the cancellation function.

In the practical realization it is possible to easily observe a good capacity of global synchronism recovery of the system: it improves compared to the first embodiment carrying the value W/I around 5 dB. The opportunity of designing the gain loop of recovery is pointed out regarding the integrating block of the XPIC to a value at least double of what the designer would normally assign to the demodulator loop: it is also opportune to equip the circuit of an automatism of carrier frequency shift in case of loss of synchronism.

What described is sufficient for a skilled designer of the field for realizing a similar apparatus.

The system according to the present invention does not set constraints to the methods of codifying the information, that is a more external process to that in object, so as it does not set constraints to the type of modulation used. In the cited examples it is referred, to a modulation of type in quadrature and to a multilevel (MQAM) in a not limitative way.

The system according to the present invention also allows its use in other applications devoted to the case in which the interference to be reduced, during the normal use of a single polarization, due to a deriving cochannel signal coming from a second connection joining in the same node and not sufficiently discriminated from the angle of irradiation of the antennas. In fact it is frequent to have to resolve this problem, in the design of a transceiver radio station. The variation is simply obtained identifying one of the two receivers of the case of reuse, for instance the one placed on the vertical, like the receiver one set for receiving the signal from the direction from which the interference originates and maintaining the shown connections.

## Claims

1. Demodulation system of a first signal and of a second signal, said first signal being interfered by said second signal, comprising:

   a first converter (211) for converting said first signal from radio frequency to intermediate frequency controlled by a first oscillator (250);
   a first multiplier (214) in cascade to said first converter (211);
   a first equalizer (217) in cascade to said first multiplier (214);
   a second converter (213) for converting said second signal from radio frequency to intermediate frequency controlled by a second oscillator (251);
   a second multiplier (224) in cascade to said second converter (213);
   a second equalizer (222) in cascade to said second multiplier (224);
   a first adder node (218) in cascade to said first equalizer (217) and to said second equalizer (222);
   a first decider circuit (221) in cascade to said first adder node (218) providing an esteemed signal (220) of said first signal and a signal corresponding to the square error (Erh) of said esteemed signal (220) compared to the ideal value;

a first carrier recovery circuit (252) receiving a coming out signal from said first adder node (218) and said signal corresponding to the square error (Erh) and providing a signal to said first multiplier (214);

a second carrier recovery circuit (253) receiving said signal corresponding to the square error (Erh) and a signal provided from said second multiplier (224) and providing a signal to said second multiplier (224).

2. Demodulation system according to claim 1 **characterized in that** said first equalizer (217) and said second equalizer (222) receive said signal corresponding to the square error (Erh) in input.

3. Demodulation system according to claim 1 **characterized in that** said first signal corresponds to a signal vertically polarized and said second signal corresponds to a signal horizontally polarized.

4. Demodulation system according to claim 1 **characterized in that** said first signal corresponds to a signal coming from a first direction and said second signal corresponds to a signal coming from a second direction with an angle near to said first direction.

5. Demodulation system according to claim 1 **characterized by** comprising

a third multiplier (240) in cascade to said second converter (213);

a third equalizer (238) in cascade to said third multiplier (240);

a fourth multiplier (230) in cascade to said first converter (211);

a fourth equalizer (233) in cascade to said fourth multiplier (230);

a second adder node (234) in cascade to said third equalizer (238) and to said fourth equalizer (233);

a second decider circuit (235) in cascade to said second adder node (234) providing an esteemed signal (236) of said second signal and a signal corresponding to the square error (Erv) of said esteemed signal (236) compared to the ideal value;

a third circuit (255) for the carrier recovery receiving a coming out signal from said second adder node (234) and said signal corresponding to the square error (Erv) and providing a signal to said third multiplier (240);

a fourth carrier recovery circuit (254) receiving said signal corresponding to the square error (Erv) and a signal provided from said fourth multiplier (230) and providing a signal to said fourth multiplier (230).

6. Demodulation system according to claim 1 **characterized in that** said first decider circuit (221) provides in output an esteemed signal (220) of said first signal, a signal corresponding to the square error (Erh) of said esteemed signal (220), a signal corresponding to the circular error (Erch) of said esteemed signal (220) and a signal corresponding to the modified circular error (Erph) of said esteemed signal (220); said signal corresponding to the square error (Erh) is applied to said first carrier recovery circuit (252); said signal corresponding to the circular error (Erch) is applied to said first equalizer (217) and to said second equalizer (222); said signal corresponding to the modified circular error (Erph) is applied to said according to circuit (253) for the carrier recovery.

7. Demodulation system according to claim 5 **characterized in that** said second decider circuit (235) provides in output an esteemed signal (236) of said second signal, a signal corresponding to the square error (Erv) of said esteemed signal (236), a signal corresponding to the circular error (Ercv) of said esteemed signal (236) and a signal corresponding to the modified circular error (Erpv) of said esteemed signal (236); said signal corresponding to the square error (Erv) is applied to said third circuit (255) for the carrier recovery; said signal corresponding to the circular error (Ercv) is applied to said third equalizer (238) and to said fourth equalizer (233); said signal corresponding to the circular modified error (Erpv) is applied to said fourth carrier recovery circuit (254).

8. Telecommunication system comprising transmitting means able to transmit two radio signals and receiving means able to receive said two radio signals, said receiving means comprise a demodulation system according to claim 1.

9. Interference cancellation method of a first signal interfered by a second signal with independent receivers comprising the phases of:

converting said first signal from radio frequency to intermediate frequency by means of a first oscillator (250);

multiplying said first converted signal by a third signal;

equalizing said first converted signal multiplied with said third signal;

converting said second signal from radio frequency to intermediate frequency by means of a second oscillator (251);

multiplying said second converted signal by a fourth signal;

equalizing said second converted signal multiplied by said fourth signal; adding said first equalized signal and said second equalized signal;

determining an esteemed signal of said first signal and a signal corresponding to the square error (Erh) of said esteemed signal compared to the ideal value based on said added signal;

generating said third signal based on said added signal and said signal corresponding to the square error (Erh);

generating said fourth signal based on said signal corresponding to the square error (Erh) and on a signal provided from the step of multiplying said second converted signal with the fourth signal.

**Patentansprüche**

1.  Demodulationssystem für ein erstes Signal und ein zweites Signal, worin das erste Signal durch das zweite Signal gestört wird, bestehend aus:

    Einem ersten Konverter (211) zum Konvertieren des ersten Signals aus dem Hochfrequenzbereich in den Zwischenfrequenzbereich, gesteuert durch einen ersten Oszillator (250);

    Einem ersten Multiplizierer (214) in Reihenschaltung zu dem ersten Konverter (211);

    Einem ersten Entzerrer (217) in Reihenschaltung zu dem ersten Multiplizierer (214);

    Einem zweiten Konverter (213) zum Konvertieren des zweiten Signals aus dem Hochfrequenzbereich in den Zwischenfrequenzbereich, gesteuert durch einen zweiten Oszillator (251);

    Einem zweiten Multiplizierer (224) in Reihenschaltung zu dem zweiten Konverter (213);

    Einem zweiten Entzerrer (222) in Reihenschaltung zu dem zweiten Multiplizierer (224);

    Einem ersten Addierer (218) in Reihenschaltung zu dem ersten Entzerrer (217) und zu dem zweiten Entzerrer (222);

    Einer ersten Entscheiderschaltung (221) in Reihenschaltung zu dem ersten Addierer (218) zur Bildung eines geschätzten Signals (220) des ersten Signals und eines Signals korrespondierend zu dem quadratischen Fehler (Erh) des geschätzten Signals (220) bezogen auf den Sollwert;

    Einer ersten Trägerfrequenz-Rückgewinnungsschaltung (252), welcher das von dem ersten Addierer (218) erhaltene Signal aufnimmt und das Signal korrespondierend zu dem quadratischem Fehler (Erh) aufnimmt und ein Signal für den ersten Multiplizierer (214) liefert;

    Einer zweiten Trägerfrequenz Rückgewinnungsschaltung (253), welche das Signal korrespondierend zu dem quadratischem Fehler (Erh) und eine Signal aufnimmt, welches von dem zweiten Multiplizierer (224) geliefert wird, und welcher ein Signal für den zweiten Multiplizierer (224) liefert.

2.  Demodulationssystem nach Anspruch 1, **dadurch gekennzeichnet, dass** der erste Entzerrer (214) und der zweite Entzerrer (222) ein Signal korrespondierend zu dem quadratischen Fehler (Erh) am Eingang aufnimmt.

3.  Demodulationssystem nach Anspruch 1, **dadurch gekennzeichnet, dass** das erste Signal mit einem vertikal polarisierten und das zweite Signal mit einem horizontal polarisierten Signal korrespondiert.

4.  Demodulationssystem nach Anspruch 1, **dadurch gekennzeichnet, dass** das erste Signal mit einem Signal aus einer ersten Richtung und das zweite Signal mit einem Signal aus einer zweiten Richtung korrespondiert, angenährt in einem Winkel an die erste Richtung.

5.  Demodulationssystem nach Anspruch 1, durch Folgendes **gekennzeichnet**:

    Ein dritter Multiplizierer (240) in Reihenschaltung zu einem zweiten Konverter (213);

Ein dritter Entzerrer (238) in Reihenschaltung zu einem dritten Multiplizierer (240);

Ein vierter Multiplizierer (230) in Reihenschaltung zu dem ersten Konverter (211);

Ein vierter Entzerrer (233) in Reihenschaltung zu dem vierten Multiplizierer (230);

Ein zweiter Addierer (234) in Reihenschaltung zu dem dritten Entzerrer (238) und zu dem vierten Entzerrer (233);

Eine zweite Entscheiderschaltung (235) in Reihenschaltung zu dem zweiten Addierer (234), welcher ein geschätztes Signal (236) des zweiten Signals und ein Signal korrespondierend zu dem quadratischem Fehler (Erv) des geschätzten Signals (236) in Bezug auf den Sollwert liefert;

Eine dritte Schaltung (255) zur Trägerfrequenz-Rückgewinnung, welche ein von dem zweiten Addierer (234) ausgehendes Signal aufnimmt und ein Signal korrespondierend zu dem quadratischen Fehler (Erv) aufnimmt und ein Signal für den dritten Multiplizierer (240) liefert;

Eine vierte Trägerfrequenz-Rückgewinnungsschaltung (254), welche ein Signal korrespondieren zu dem quadratischem Fehler (Erv) und ein Signal, welches von dem vierten Multiplizierer (230) geliefert wird, aufnimmt und ein Signal für den vierten Multiplizierer (230) liefert.

6. Demodulationssystem nach Anspruch 1, **gekennzeichnet dadurch, dass** die erste Entscheiderschaltung (221) im Ausgang ein geschätztes Signal (220) des ersten Signals liefert, ein zweites Signal korrespondierend zu dem quadratischem Fehler (Erh) des geschätzten Signals (220) liefert, ein Signal, welches korrespondierend zu dem quadratischen Kreisfehlersignal (Erch) des geschätzten Signals (220) liefert und ein Signal korrespondierend zu dem quadratischen Kreisfehlersignal (Erch) des ersten geschätzten Signals (220) liefert; das Signal korrespondierend zu dem quadratischen Fehler (Erh) wird einer ersten Trägerfrequenz Rückgewinnungsschaltung (252) zugeführt; das Signal korrespondierend zu dem Kreisfehlersignal (Erch) wird dem ersten Entzerrer (217) und dem zweiten Entzerrer (222) zugeführt; das Signal korrespondierend zu dem modifizierten Kreisfehlersignal (Erph) wird entsprechend der Schaltung (253) der Trägerfrequenz-Rückgewinnung zugeführt.

7. Demodulationssystem nach Anspruch 5, **dadurch gekennzeichnet, dass** die zweite Entscheiderschaltung (235) im Ausgang ein geschätztes Signal (236) des zweiten Signals liefert, ein Signal korrespondierend zu dem quadratischen Fehler (Erv) des geschätzten Signals (236), ein Signal korrespondierend zu dem quadratischen Kreisfehlersignal (Ercv) des geschätzten Signals (236) und ein Signal korrespondierend zu dem modifizierten Kreisfehlersignal (Ercv) des geschätzten Signals (236); das Signal korrespondierend zu dem quadratischem Fehler (Erv) wird der dritten Schaltung (255) zur Trägerfrequenz-Rückgewinnung zugeführt; das Signal korrespondierend zu dem Kreisfehlersignal (Ercv) wird dem dritten Entzerrer (238) und dem vierten Entzerrer (233) zugeführt; das Signal korrespondierend zu dem modifizierten Kreisfehlersignal (Erpv) wird der vierten Trägerfrequenz Rückgewinnungsschaltung (254) zugeführt.

8. Telekommunikationssystem bestehend aus Sendemittein, welche in der Lage sind zwei Hochfrequenzsignale zu senden und Empfangsmitteln, welche in der Lage sind zwei Hochfrequenzsignale zu empfangen, die Empfangsmittel bestehend aus einem Demodulationssystem nach Anspruch 1.

9. Störsignalunterdrückungsverfahren für ein erstes Signal, welches durch ein zweites Signal mit unabhängigen Empfängern gestört wird, bestehend aus den Schritten:

Konvertieren des ersten Signals aus dem Hochfrequenzbereich in den Zwischenfrequenzbereich durch einen ersten Oszillator (250);

Multiplizieren des ersten umgesetzten Signals in ein drittes Signal;

Entzerren des ersten umgesetzten Signals multipliziert mit dem dritten Signal;

Konvertieren des zweiten Signals aus dem Hochfrequenzbereich in den Zwischenfrequenzbereich durch einen zweiten Oszillator (251);

Multiplizieren des zweiten konvertierten Signals durch ein viertes Signal;

Entzerren eines zweiten konvertierten Signals multipliziert mit dem vierten Signal;

Addieren eines ersten entzerrten Signals in ein zweites entzerrtes Signal

Bestimmen eines geschätzten Signals des ersten Signals und eines Signals korrespondierend zu dem quadratischem Fehler (Erh) des geschätzten Signals in Bezug auf den Sollvektor basierend auf dem zugefügten Signal;

Generieren eines dritten Signals basierend auf dem zugefügten Signal und dem Signal korrespondierend zu dem quadratischen Fehler (Erh);

Generieren eines vierten Signals basierend auf dem Signal korrespondierend zu dem quadratischen Fehler (Erh) und auf einem Signal, welches von dem Schritt des Multiplizierens eines zweiten konvertierten Signals mit einem mit dem vierten Signal generiert wird.

## Revendications

1. Système de démodulation d'un premier signal et d'un deuxième signal, ledit premier signal étant interféré par ledit deuxième signal, comprenant :

   un premier convertisseur (211) pour convertir ledit premier signal d'une fréquence radio en une fréquence intermédiaire contrôlé par un premier oscillateur (250) ;
   un premier multiplicateur (214) en cascade avec ledit premier convertisseur (211) ;
   un premier égaliseur (217) en cascade avec ledit premier multiplicateur (214) ;
   un deuxième convertisseur (213) pour convertir ledit deuxième signal d'une fréquence radio en une fréquence intermédiaire contrôlé par un deuxième oscillateur (251) ;
   un deuxième multiplicateur (224) en cascade avec ledit deuxième convertisseur (213) ;
   un deuxième égaliseur (222) en cascade avec ledit deuxième multiplicateur (224) ;
   un premier noeud de synthèse (218) en cascade avec ledit premier égaliseur (217) et ledit deuxième égaliseur (222) ;
   un premier circuit de décision (221) en cascade avec ledit premier noeud de synthèse (218) fournissant un signal estimé (220) dudit premier signal et un signal correspondant à l'erreur au carré (Erh) dudit signal estimé (220) par rapport à la valeur idéale ;
   un premier circuit de récupération de porteuse (252) recevant un signal sortant dudit premier noeud de synthèse (218) et ledit signal correspondant à l'erreur au carré (Erh) et fournissant un signal audit premier multiplicateur (214) ;
   un deuxième circuit de récupération de porteuse (253) recevant ledit signal correspondant à l'erreur au carré (Erh) et un signal fourni par ledit deuxième multiplicateur (224) et fournissant un signal audit deuxième multiplicateur (224).

2. Système de démodulation selon la revendication 1 **caractérisé en ce que** ledit premier égaliseur (217) et ledit deuxième égaliseur (222) reçoivent ledit signal correspondant à l'erreur au carré (Erh) en entrée.

3. Système de démodulation selon la revendication 1 **caractérisé en ce que** ledit premier signal correspond à un signal polarisé verticalement et ledit deuxième signal correspond à un signal polarisé horizontalement.

4. Système de démodulation selon la revendication 1 **caractérisé en ce que** ledit premier signal correspond à un signal venant d'une première direction et ledit deuxième signal correspond à un signal venant d'une deuxième direction avec un angle proche de ladite première direction.

5. Système de démodulation selon la revendication 1 **caractérisé en ce qu'**il comprend

   un troisième multiplicateur (240) en cascade avec ledit deuxième convertisseur (213) ;
   un troisième égaliseur (238) en cascade avec ledit troisième multiplicateur (240) ;
   un quatrième multiplicateur (230) en cascade avec ledit premier convertisseur (211) ;
   un quatrième égaliseur (233) en cascade avec ledit quatrième multiplicateur (230) ;
   un deuxième noeud de synthèse (234) en cascade avec ledit troisième égaliseur (238) et ledit quatrième égaliseur (233) ;
   un deuxième circuit de décision (235) en cascade avec ledit deuxième noeud de synthèse (234) fournissant un signal estimé (236) dudit deuxième signal et un signal correspondant à l'erreur au carré (Erv) dudit signal estimé (236) par rapport à la valeur idéale ;

un troisième circuit (255) de récupération de porteuse recevant un signal sortant dudit deuxième noeud de synthèse (234) et ledit signal correspondant à l'erreur au carré (Erv) et fournissant un signal audit troisième multiplicateur (240) ;

un quatrième circuit de récupération de porteuse (254) recevant ledit signal correspondant à l'erreur au carré (Erv) et un signal fourni par ledit quatrième multiplicateur (230) et fournissant un signal audit quatrième multiplicateur (230).

6. Système de démodulation selon la revendication 1 **caractérisé en ce que** ledit premier circuit de décision (221) fournit en sortie un signal estimé (220) dudit premier signal, un signal correspondant à l'erreur au carré (Erh) dudit signal estimé (220), un signal correspondant à l'erreur circulaire (Erch) dudit signal estimé (220) et un signal correspondant à l'erreur circulaire modifiée (Erph) dudit signal estimé (220) ; ledit signal correspondant à l'erreur au carré (Erh) est appliqué audit premier circuit de récupération de porteuse (252) ; ledit signal correspondant à l'erreur circulaire (Erch) est appliqué audit premier égaliseur (217) et audit deuxième égaliseur (222) ; ledit signal correspondant à l'erreur circulaire modifiée (Erph) est appliqué audit deuxième circuit (253) de récupération de porteuse.

7. Système de démodulation selon la revendication 5 **caractérisé en ce que** ledit deuxième circuit de décision (235) fournit en sortie un signal estimé (236) dudit deuxième signal, un signal correspondant à l'erreur au carré (Erv) dudit signal estimé (236), un signal correspondant à l'erreur circulaire (Ercv) dudit signal estimé (236) et un signal correspondant à l'erreur circulaire modifiée (Erpv) dudit signal estimé (236) ; ledit signal correspondant à l'erreur au carré (Erv) est appliqué audit troisième circuit (255) de récupération de porteuse ; ledit signal correspondant à l'erreur circulaire (Ercv) est appliqué audit troisième égaliseur (238) et audit quatrième égaliseur (233) ; ledit signal correspondant à l'erreur circulaire modifiée (Erpv) est appliqué audit quatrième circuit de récupération de porteuse (254).

8. Système de télécommunication comprenant un moyen de transmission capable de transmettre deux signaux radio et un moyen de réception capable de recevoir lesdits deux signaux radio, ledit moyen de réception comprend un système de démodulation selon la revendication 1.

9. Procédé de suppression d'interférences d'un premier signal interféré par un deuxième signal avec des récepteurs indépendants comprenant les phases de :

conversion dudit premier signal d'une fréquence radio en une fréquence intermédiaire au moyen d'un premier oscillateur (250) ;

multiplication dudit premier signal converti par un troisième signal ;

égalisation dudit premier signal converti multiplié par ledit troisième signal ;

conversion dudit deuxième signal d'une fréquence radio en une fréquence intermédiaire au moyen d'un deuxième oscillateur (251) ;

multiplication dudit deuxième signal converti par un quatrième signal ;

égalisation dudit deuxième signal converti multiplié par ledit quatrième signal ;

addition dudit premier signal égalisé et dudit deuxième signal égalisé ;

détermination d'un signal estimé dudit premier signal et d'un signal correspondant à l'erreur au carré (Erh) dudit signal estimé par rapport à la valeur idéale sur la base dudit signal additionné ;

génération dudit troisième signal sur la base dudit signal additionné et dudit signal correspondant à l'erreur au carré (Erh) ;

génération dudit quatrième signal sur la base dudit signal correspondant à l'erreur au carré (Erh) et d'un signal fourni à l'étape de multiplication dudit deuxième signal converti par le quatrième signal.

Fig.1

EP 1 365 519 B1

Fig.2

Fig.3

EP 1 365 519 B1

16